# EUROPÄISCHE PATENTSCHRIFT

(11) **EP 1 107 098 B1**
(45) Veröffentlichungstag und Bekanntmachung des Hinweises auf die Patenterteilung: **26.11.2003**
(21) Anmeldenummer: 00122946.7
(22) Anmeldetag: 21.10.2000
(51) Int. Cl.: G06F 3/02

(54) **Vorrichtung zur Kommunikation mit einem Computer**
Device for communicating with a computer
Dispositif pour communiquer avec un ordinateur

(30) Priorität: 08.12.1999 DE 29921604 U
(43) Veröffentlichungstag der Anmeldung: 13.06.2001
(73) Patentinhaber: Bormann EDV + Zubehör GmbH, 86356 Neusäss (DE)
(72) Erfinder: Bormann, Hans-Joachim, 86356 Neusäss (DE)
(74) Vertreter: Rapp, Bertram, Dr.

(56) Entgegenhaltungen:
- EP-A- 0 387 011
- WO-A-97/04437
- WO-A-99/21077
- DE-A- 19 924 618
- DE-U- 9 417 240
- DE-U- 29 711 813

## Beschreibung

Die Erfindung betrifft eine Vorrichtung zur Kommunikation mit einem Computer nach dem Oberbegriff des Anspruches 1.

Bekannte derartige Vorrichtungen sind klassische Computertastaturen, also in der Regel alphanumerische Tastaturen mit zusätzlichen Funktionstasten, die über ein Kabel an einen Desktop- oder Notebook-Personalcomputer anschließbar sind.

Es ist auch bekannt, daß derartige Tastaturen einfache LCD-Anzeigenvorrichtung, beispielsweise zur Anzeige der momentanen Taktfrequenz des Computers oder anderer mit nur wenigen Ziffern darstellbarer Informationen aufweisen.

Ferner sind Computerbildschirme bekannt, die in der Regel mit Kathodenstrahlröhren, Plasmaentladungseinrichtungen oder Flüssigkristallanzeigen arbeiten. Auch diese Computerbildschirme sind an Desktop- oder Notebook-Computer anschließbar.

Stellt sich die Aufgabe, innerhalb eines fahrenden Kraftfahrzeuges mit einem Computer kommunizieren zu müssen, verwendet man zur Zeit bekannte Notebooks, also Computer, die eine integrierte Tastatur und einen integrierten Flachbildschirm aufweisen. Dies hat den Nachteil, daß bei schnellen Fahrten der Notebook-Computer vom Schoß des Beifahrers herunterfallen oder im Auto herumfliegen kann. Aufgrund des Gewichts des Notebook-Computers bedeutet dies ein erhebliches Verletzungsrisiko für die Fahrzeuginsassen. Die Verwendung von Notebook-Computern in fahrenden Kraftfahrzeugen erzeugt insbesondere eine erhebliche Verletzungsgefahr bei einem Unfall, beispielsweise wenn durch den sich aufblasenden Airbag der Personalcomputer gegen das Gesicht des Beifahrers geschleudert wird. Darüber hinaus kann nur der Beifahrer oder ein auf dem Rücksitz befindlicher Mitfahrer mit dem Gerät arbeiten. Wünscht der Fahrer eine Information abzurufen, muß der Notebook-Computer dem Fahrer zugewandt werden, was oft umständlich und verkehrsunsicher ist.

Es sind auch Bildschirme bekannt, die fest im Fahrzeug eingebaut werden, und zwar insbesondere aus Navigationsanwendungen. Diese Festeinbauten weisen jedoch den Nachteil hoher Sonderentwicklungskosten auf, da sich die Fahrzeugtypen stark voneinander unterscheiden und für jede Einbausituation ein anderer Einbausatz bereitgehalten werden muß. Darüber hinaus ist der Bildschirm dann fest mit dem Fahrzeug verbunden und, beispielsweise bei einem Fahrzeugwechsel, nur unter erheblichem Aufwand von diesem lösbar. Ein einfaches Mitnehmen in ein anderes Fahrzeug ist nicht möglich. Ferner hat die räumliche Trennung zwischen Bildschirm und Bedieneinheit (Tastatur) den Nachteil, daß der Anwender einen großen Abstand zwischen beiden Vorrichtungen zu überwinden hat, um seine Eingabe am Display zu kontrollieren. Ein schnelles Arbeiten ist damit unmöglich.

Es besteht daher die Aufgabe, eine Kommunikationsvorrichtung mit einem Computer, insbesondere einem in einem Kraftfahrzeug angeordneten Personalcomputer bereitzustellen, welche schnell und einfach bedienbar ist, sowohl durch den Beifahrer als auch durch den Fahrer sowie weitere Fahrzeuginsassen ablesbar ist und welche ein geringes Verletzungsrisiko für die Insassen auch bei einem Unfall aufweist.

Gelöst wird diese Aufgabe mit den kennzeichnenden Merkmalen des Anspruches 1. Vorteilhafte Ausgestaltungen sind den Unteransprüchen entnehmbar.

Ein Ausführungsbeispiel der Erfindung wird im folgenden unter Bezugnahme auf die begleitende Zeichnung näher beschrieben, welche eine perspektivische Ansicht einer erfindungsgemäßen Vorrichtung zeigt.

Die Vorrichtung weist ein im wesentlichen quaderförmiges, flaches Gehäuses 1 von etwa 30 - 50 cm Länge und etwa 10 - 20 cm Höhe auf und ist ca. 1 - 4 cm dick. An der Oberseite 2 des flachen Gehäuses 1 befindet sich eine alphanumerische Computertastatur 3 von an sich bekannter Bauart, vorzugsweise eine Computertastatur 3 mit Hubtasten, wie sie von Notebook- oder Desktop-Computern bekannt ist. Die Hubtasten lassen sich, beispielsweise verglichen mit Folientastaturen, erheblich leichter bedienen und ermöglichen eine zuverlässigere Texteingabe als andere Flachtastaturen.

Das Gehäuse 1 selbst besteht aus einem weichen Material, beispielsweise Schaumstoff, Gummi, Plastik oder einem Integralschaumstoff.

Innerhalb des Gehäuses 1 ist links neben der Computertastatur 2 ein Flachbildschirm 4 so angeordnet, daß er von der Oberseite 2 des Gehäuses 1 aus sichtbar ist. Der Flachbildschirm 4 ist vollständig in das Gehäuse 1 integriert. Es handelt sich beispielsweise um einen Flüssigkristall-Flachbildschirm mit farbiger Anzeige. Der Flachbildschirm 4 ist, wie ein herkömmlicher Computerbildschirm, so ausgebildet, daß er von dem Bildschirmtreiber bzw. der Grafikkarte eines Computers aus ansteuerbar ist. Er hat beispielsweise eine VGA-Auflösung von 800 x 600 Punkten und ist somit in der Lage nicht nur Texte, sondern auch Grafiken, Bilder und Fotografien darzustellen.

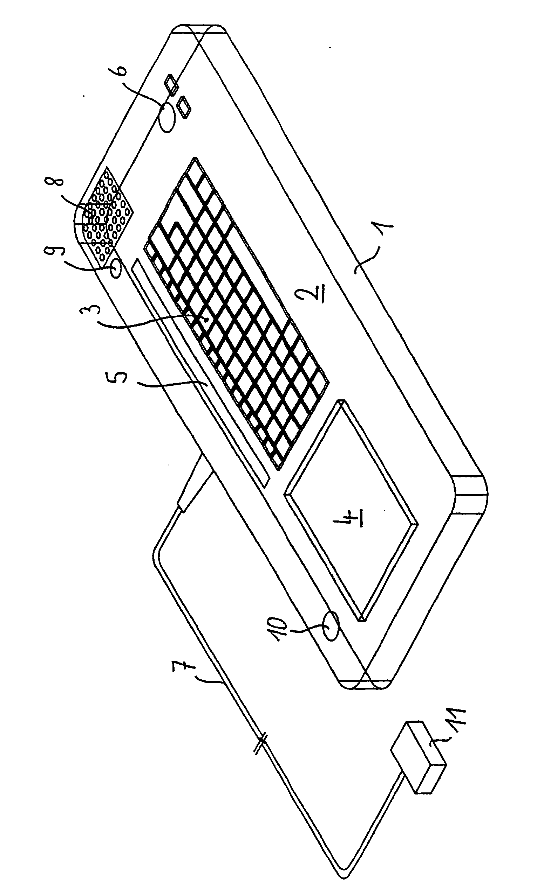

An der Oberseite 2 des Gehäuses 1 befindet sich oberhalb der Tastatur 3 eine Beleuchtungsvorrichtung 5 zur Beleuchtung der Computertastatur 3. Diese ist in der Zeichnung nur schematisch angedeutet. Es kann sich beispielsweise um eine nach oben herausragende LED-Einrichtung handeln. In einer alternativen Ausgestaltung ist die Computertastatur 3 selbstleuchtend ausgebildet.

Das Gehäuse 1 kann neben der Computertastatur 3 und dem Bildschirm 4 weitere Elemente zur Kommunikation mit dem Computer aufweisen, die vorzugsweise an der Oberseite 2 des Gehäuses 1 angeordnet sind. Im dargestellten Ausführungsbeispiel ist eine als Trackball ausgebildete Zeigevorrichtung 6 rechts unterhalb der Computertastatur 3 vorgesehen, während sich rechts oberhalb der Computertastatur 3 ein Mikrofon 9 und ein Lautsprecher 8 befinden. Links oberhalb des Bildschirms 4 ist ein Ein/Aus-Schalter 10 für den Computer angeordnet.

Die Vorrichtung 1 verfügt über ein Anschlußkabel 7, über welches sie mit einem Notebook-, Laptop- oder Desktop-Computer verbindbar ist. Das Anschlußkabel 7 ist einerseits fest mit der Vorrichtung 1 verbunden und weist andererseits einen Stecker 11 auf, der beispielsweise mit einer Dockingstation verbindbar ist, die ihrerseits mit den Bildschirm-, Tastatur-, Zeigegerät- und Lautsprecherausgängen eines Computers verbindbar ist. Mit Hilfe dieser Dockingstation oder einer vergleichbaren Einrichtung werden also die verschiedenen, an einem Computer befindlichen Ein- und Ausgänge zusammengefaßt, so daß die Vorrichtung 1 nur über ein einziges Anschlußkabel 7 mit dem Computer kommuniziert.

Die Vorrichtung wird besonders bevorzugt in Kraftfahrzeugen eingesetzt, in die ein Personalcomputer, beispielsweise ein Notebook-Computer fest oder lösbar eingebaut ist. Der Computer kann beispielsweise im Kofferraum oder auf den Rücksitzen eines Kraftfahrzeugs montiert sein, während die Vorrichtung 1 selbst auf dem Schoß des Beifahrers betrieben wird. Besonders bei Anwendung, bei denen auch der Fahrer Einblick in den Bildschirm haben sollte, ist es vorteilhaft, den Bildschirm 4 links von der Computertastatur 3 anzuordnen, da der Fahrer links vom Beifahrer sitzt. In Ländern mit Linksverkehr wäre die Anordnung genau umgekehrt, also der Bildschirm 4 rechts von der Computertastatur 3 anzuordnen.

Über die erfindungsgemäße Vorrichtung kann mit einem Computer vollständig kommuniziert werden, d. h. der Computer kann über den Ein/Aus-Schalter 10 ein- und ausgeschaltet werden, es können Daten und Texte über die Computertastatur 3 eingegeben werden, ebenso über das Mikrofon 9 und über die Zeigevorrichtung 6 und es können Daten, Texte, Fotos, Bilder und Grafiken über den Bildschirm 4 so angezeigt werden, wie auf einem Bildschirm eines herkömmlichen Computers.

Da die Vorrichtung erheblich leichter ist als ein Notebook-Computer, ist sie praktischer in der Bedienung und kann beispielsweise auch vom Vordersitz auf den Rücksitz gereicht werden oder dem Fahrer zugewandt werden, damit dieser den Bildschirm 4 ablesen kann. Da die Vorrichtung darüber hinaus aus einem weichen Material gefertigt ist, bestehen bei einem Unfall erheblich geringere Verletzungsrisiken als bei der Arbeit mit herkömmlichen Notebook-Computern auf dem Schoß des Beifahrers.

Verglichen mit fest eingebauten Bildschirmen hat die Vorrichtung ferner den Vorteil, daß Bildschirm 4 und Computertastatur 3 unmittelbar nebeneinander liegen, was eine sofortige visuelle Kontrolle der Eingaben und damit ein schnelles Arbeiten ermöglicht. Außerdem kann die Vorrichtung, zusammen mit dem Notebook-Computer an dem sie angeschlossen ist, schnell in andere Kraftfahrzeuge portiert werden.

In einer alternativen Ausgestaltung der Vorrichtung erfolgt die Kommunikation mit dem Computer nicht über das Anschlußkabel 7, sondern über Funk- oder Infrarotstrahlung. Damit ist die Vorrichtung völlig von dem Computer bzw. dem Fahrzeug getrennt und kann ohne Behinderung durch das Anschlußkabel 7 bewegt und abgelegt werden.

## Patentansprüche

1. Vorrichtung zur Kommunikation mit einem Computer, mit einem flachen Gehäuse (1), welches an seiner Oberseite (2) eine alphanumerische Computertastatur (3) aufweist, **dadurch gekennzeichnet, daß** innerhalb des Gehäuses (1) und an dessen Oberseite (2) seitlich der Computertastatur (3) ein Bildschirm (4) angeordnet ist, der von dem Bildschirmtreiber des Computers ansteuerbar ist.

2. Vorrichtung nach Anspruch 1, **dadurch gekennzeichnet, daß** das Gehäuse (1) aus einem weichen, nachgiebigen Material besteht

3. Vorrichtung nach einem der voranstehenden Ansprüche, **dadurch gekennzeichnet, daß** der Bildschirm (4) ein Flüssigkristall-Flachbildschirm ist.

4. Vorrichtung nach einem der voranstehenden Ansprüche, **dadurch gekennzeichnet, daß** die Computertastatur (3) beleuchtet ist.

5. Vorrichtung nach Anspruch 4, **dadurch gekennzeichnet, daß** die Computertastatur (3) selbstleuchtend ausgebildet ist.

6. Vorrichtung nach Anspruch 4, **dadurch gekennzeichnet, daß** an der Oberseite (2) des Gehäuses (1) eine Beleuchtungsvorrichtung (5) zur Beleuchtung der Computertastatur (3) angeordnet ist.

7. Vorrichtung nach einem der voranstehenden Ansprüche, **dadurch gekennzeichnet, daß** an der Oberseite (2) des Gehäuses (1) zusätzlich eine Zeigevorrichtung (6) angeordnet ist.

8. Vorrichtung nach Anspruch 7, **dadurch gekennzeichnet, daß** die Zeigevorrichtung (6) ein beweglicher Stab und/oder ein Mousepad und/oder ein Trackball ist.

9. Vorrichtung nach einem der voranstehenden Ansprüche, **dadurch gekennzeichnet, daß** sie ein Anschlußkabel (7) zur Verbindung mit dem Computer aufweist.

10. Vorrichtung nach Anspruch 9, **dadurch gekennzeichnet, daß** das Anschlußkabel (7) zu einer Dockingstation führt, welche ihrerseits sowohl mit dem Bildschirmausgang als auch mit dem Tastaturausgang des Computers verbindbar ist

11. Vorrichtung nach einem der Ansprüche 1 bis 8, **dadurch gekennzeichnet, daß** sie drahtlos, beispielsweise über Funk oder Infrarot mit dem Computer kommuniziert.

12. Vorrichtung nach einem der voranstehenden Ansprüche, **dadurch gekennzeichnet, daß** der Bildschirm (4) von der Seite des Benutzers aus gesehen links neben der Tastatur (3) angeordnet ist.

13. Vorrichtung nach einem der Ansprüche 1 bis 11, **dadurch gekennzeichnet, daß** der Bildschirm (4) von der Seite des Benutzers aus gesehen rechts neben der Tastatur (3) angeordnet ist.

14. Vorrichtung nach einem der voranstehenden Ansprüche zur Kommunikation mit einem in einem Kraftfahrzeug eingebauten Notebook-Personalcomputer.

15. Vorrichtung nach einem der voranstehenden Ansprüche, **dadurch gekennzeichnet, daß** sie zusätzlich einen Lautsprecher (8) und/oder ein Mikrofon (9) aufweist.

16. Vorrichtung nach einem der voranstehenden Ansprüche, **dadurch gekennzeichnet, daß** sie zusätzlich einen Ein/Aus-Schalter (10) für den Computer aufweist.

17. Vorrichtung nach einem der voranstehenden Ansprüche, **dadurch gekennzeichnet, daß** die Computertastatur (3) eine Hubtastatur ist.

## Claims

1. Device for communicating with a computer, with a flat housing (1) which on its upper side (2) exhibits an alphanumeric computer keyboard (3), **characterised in that** a screen (4), which can be actuated by the screen driver of the computer, is arranged inside the housing (1) and on its upper side (2) to the side of the computer keyboard (3).

2. Device according to claim 1, **characterised in that** the housing (1) is made of a soft yielding material.

3. Device according to one of the preceding claims, **characterised in that** the screen (4) is a liquid crystal flat screen.

4. Device according to one of the preceding claims, **characterised in that** the computer keyboard (3) is illuminated.

5. Device according to claim 4, **characterised in that** the computer keyboard (3) is self-illuminating.

6. Device according to claim 4, **characterised in that** an illuminating device (5) for illuminating the computer keyboard (3) is arranged on the upper side (2) of the housing (1).

7. Device according to one of the preceding claims, **characterised in that** a pointing device (6) is additionally arranged on the upper side (2) of the housing (1).

8. Device according to claim 7, **characterised in that** the pointing device (6) is a moving bar and/or a mouse pad and/or a tracker ball.

9. Device according to one of the preceding claims, **characterised in that** it exhibits a connecting cable (7) for connection with the computer.

10. Device according to claim 9, **characterised in that** the connecting cable (7) leads to a docking station which for its part can be connected both with the screen output and with the keyboard output of the computer.

11. Device according to one of claims 1 to 8, **characterised in that** it communicates with the computer by wireless means, for example by radio or infrared means.

12. Device according to one of the preceding claims, **characterised in that** viewed from the side of the user, the screen (4) is arranged on the left next to the keyboard (3).

13. Device according to one of claims 1 to 11, **characterised in that** viewed from the side of the user, the screen (4) is arranged on the right next to the keyboard (3).

14. Device according to one of the preceding claims for communicating with a notebook personal computer installed in a motor vehicle.

15. Device according to one of the preceding claims, **characterised in that** it additionally exhibits a loudspeaker (8) and/or a microphone (9).

16. Device according to one of the preceding claims, **characterised in that** it additionally exhibits an on/off switch (10) for the computer.

17. Device according to one of the preceding claims, **characterised in that** the computer keyboard (3) is a keyboard with lifting keys.

## Revendications

1. Dispositif pour communiquer avec un ordinateur, comportant un boîtier plat (1), lequel présente à sa face supérieure (2) un clavier d'ordinateur alphanumérique (3), **caractérisé en ce qu'**à l'intérieur du boîtier (1) et à sa face supérieure (2) latéralement au clavier d'ordinateur (3), est disposé un écran de visualisation (4), qui peut être commandé par le pilote d'écran de visualisation de l'ordinateur.

2. Dispositif selon la revendication 1, **caractérisé en ce que** le boîtier (1) est composé à base d'un matériau mou, déformable.

3. Dispositif selon l'une quelconque des revendications précédentes, **caractérisé en ce que** l'écran de visualisation (4) est un écran plat à cristaux liquides.

4. Dispositif selon l'une quelconque des revendications précédentes, **caractérisé en ce que** le clavier d'ordinateur (3) est éclairé.

5. Dispositif selon la revendication 4, **caractérisé en ce que** le clavier d'ordinateur (3) est réalisé comme auto-éclairant.

6. Dispositif selon la revendication 4, **caractérisé en ce qu'**à la face supérieure (2) du boîtier (1), est disposé un dispositif d'éclairage (5) destiné à l'éclairage du clavier d'ordinateur (3).

7. Dispositif selon l'une quelconque des revendications précédentes, **caractérisé en ce qu'**à la face supérieure (2) du boîtier (1), est disposé, en supplément, un dispositif de pointage (6).

8. Dispositif selon la revendication 7, **caractérisé en ce que** le dispositif de pointage (6) est une barrette mobile et/ou un tapis de souris et/ou une boule de pointage.

9. Dispositif selon l'une quelconque des revendications précédentes, **caractérisé en ce qu'**il présente un câble de raccordement (7) pour la connexion à l'ordinateur.

10. Dispositif selon la revendication 9, **caractérisé en ce que** le câble de raccordement (7) conduit à une station de fixation, laquelle, de son côté, peut être reliée tant à la sortie d'écran de visualisation qu'à la sortie de clavier de l'ordinateur.

11. Dispositif selon l'une quelconque des revendications 1 à 8, **caractérisé en ce qu'**il communique sans fil, par exemple par radio ou par infrarouge, avec l'ordinateur.

12. Dispositif selon l'une quelconque des revendications précédentes, **caractérisé en ce que** l'écran de visualisation (4) est, vu de l'utilisateur, disposé à gauche à côté du clavier (3).

13. Dispositif selon l'une quelconque des revendications 1 à 11, **caractérisé en ce que** l'écran de visualisation (4) est, vu de l'utilisateur, disposé à droite à côté du clavier (3).

14. Dispositif selon l'une quelconque des revendications précédentes destiné à communiquer avec un ordinateur bloc-notes personnel intégré dans un véhicule à moteur.

15. Dispositif selon l'une quelconque des revendications précédentes, **caractérisé en ce qu'**il présente, en supplément, un haut-parleur (8) et/ou un microphone (9).

16. Dispositif selon l'une quelconque des revendications précédentes, **caractérisé en ce qu'**il présente, en supplément, un interrupteur de mise en fonction - mise hors fonction (10) de l'ordinateur.

17. Dispositif selon l'une quelconque des revendications précédentes, **caractérisé en ce que** le clavier d'ordinateur (3) est un clavier à touches enfonçables.
